(19) Europäisches Patentamt

European Patent Office

Office européen des brevets

(11) **EP 0 795 853 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(51) Int Cl.7: **G11B 5/592**, G11B 15/467, G11B 15/473

(21) Anmeldenummer: **97103502.7**

(22) Anmeldetag: **04.03.1997**

(54) **Detektionsschaltung für Pilottöne zur Spurfolgeregelung bei Magnetbandaufzeichnungen**

Pilot signal detection circuit for track following in magnetic tape recording

Circuit de détection de signaux pilotes pour le suivi de piste d'enregistrements sur bande magnétique

(84) Benannte Vertragsstaaten:
**DE FR GB IT**

(30) Priorität: **13.03.1996 DE 19609736**

(43) Veröffentlichungstag der Anmeldung:
**17.09.1997 Patentblatt 1997/38**

(73) Patentinhaber: **DEUTSCHE THOMSON-BRANDT GMBH**
**78048 Villingen-Schwenningen (DE)**

(72) Erfinder:
• **Schemmann, Heinrich**
  **78052 Villingen-Schwenningen (DE)**
• **Roth, Sabine**
  **78087 Mönchweiler (DE)**
• **Kaaden, Jürgen**
  **78052 Villingen-Schwenningen (DE)**

(74) Vertreter: **Wördemann, Hermes, Dipl.-Ing.**
**Deutsche Thomson-Brandt GmbH,**
**Licensing & Intellectual Property,**
**Karl-Wiechert-Allee 74**
**30625 Hannover (DE)**

(56) Entgegenhaltungen:
**EP-A- 0 677 841**

**Beschreibung**

Die vorliegende Erfindung betrifft eine Detektionsschaltung für Pilottöne, die zur Spurfolgeregelung bei Magnetbandaufzeichnungen verwendet werden, insbesondere zur Spurfolgeregelung bei Schrägspurmagnetbandaufzeichnungen unter Verwendung von auf dem Band aufgezeichneten Pilottönen.

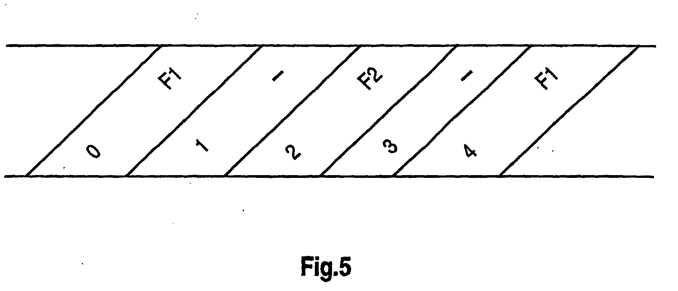

Zur Regelung der Position eines Lese-/Schreibkopfes in einem Aufzeichnungssystem mit Magnetbändern, beispielsweise bei zukünftigen digitalen Videorekordern, die sich momentan noch in der Definitionsphase bzw. Erprobungsphase befinden, werden auf den Schrägspuren des Bandes dem Nutzsignal bei der Aufzeichnung bestimmte unmodulierte Töne überlagert, ohne daß das Nutzsignal gestört wird. Dies ist beispielsweise bekannt aus "Borgers et al.: An Experimental Digital VCR with 40 mm Drum, single Actuator and DCT-based Bit-Rate Reduction, IEEE Transactions on Consumer Electronics, Vol. 34, No. 3, August 1988, page 597ff", wo zwei Pilottöne unterschiedlicher Frequenzen F1 und F2 auf den Tracks bzw. Schrägspuren aufgezeichnet werden. In der Fig. 5 ist beispielshaft ein derartiges Verfahren skizziert, wobei die Spuren 1 und 3 nur Nutzsignale, aber keinerlei Spektralanteile der Pilottfrequenzen F1 oder F2 enthalten, während zusätzlich die Spur 0 einen Pilotton der Frequenz F1, die Spur 2 einen Ton der Frequenz F2 und die Spur 4 wiederum einen Pilotton der Frequenz F1 enthält. Diese Spursequenz wiederholt sich in einem Viererrhythmus. Bei der Wiedergabe können diese Pilotsignale detektiert werden und ermöglichen dann eine Aussage über die aktuelle Kopfposition relativ zum aufgezeichneten Magnetisierungsmuster, da der Magnetkopf aufgrund seiner Abmessung und Feldverteilung die Eigenschaft hat, daß auch Anteile der linken und rechten Nachbarspur der aktuellen Spur im Wiedergabesignal auftreten. So sind beim Playback der Spur 1 im Signal auch Anteile der Spuren 0 und 2 und folglich insbesondere deren Pilottöne zu finden. Durch Herausfiltern der Anteile der Frequenzen F1 und F2, Bestimmen der Amplituden der Pilotsignale und nachfolgende Differenzbildung der Amplituden wird eine Regelgröße definiert, die Informationen darüber enthält, ob sich der Kopf näher an der Spur 0 oder der Spur 2 befindet. Demzufolge kann ein derartiges Differenzsignal zur Positionsregelung des Lese-/Schreibkopfes verwendet werden. Eine derartige exakte Positionierung des Kopfes ist insbesondere notwendig bei digitalen Videorekordern, da aufgrund der hohen digitalen Informationsmenge, d.h. hoher Aufzeichnungsdichte, zum Lesen und Aufzeichnen der Daten ein exaktes Positionieren notwendig ist. Da nun die Pilotsignale nur in jeder zweiten Spur vorhanden sind, ist in dem Beispiel nach der Fig. 5 dieses Verfahren natürlich nur in den Spuren 1, 3, 5 ... verwendbar. Aufgrund der Trägheit des mechanischen Kopfsystems ist aber das zeitweise Vorhandensein der Pilottoninformation zur Steuerung der Kopfpositionierung ausreichend.

Aus dem obenerwähnten Dokument ist ein Verfahren bekannt, bei dem die beiden Pilottöne mittels einer jeweiligen Bandpaßfilterung und anschließender Gleichrichtung separiert werden. Um die schwachen Pilottöne von dem starken Nutzsignal zu trennen, müssen die verwendeten Filter sehr schmalbandig sein (Güte 80 ... 100) und gute Dynamikeigenschaften hinsichtlich des Rauschens und der Linearität haben. Bekannte Realisierungen verwenden abgeglichene diskrete Elemente (LC). Nachteilig dabei ist, daß diese LC-Filter wegen der Schmalbandigkeit und der Güte teuer sind und weiterhin einzeln abgeglichen werden müssen. Ein weiterer Nachteil ist, daß die Pilottonfrequenz bei einer Variation der Bandgeschwindigkeit schwankt, so daß eine Auswertung der Pilottonamplituden zur Regelung der Kopfposition bei der vorgegebenen Schmalbandigkeit der Bandpaßfilter nur bei einer bestimmten Abspielgeschwindigkeit des Bandes möglich ist. Während eines Slow-Motion-Betrieb oder anderer Trickmodi würde die Regelung beispielsweise entweder nicht funktionieren oder eine fehlerhafte Auswertung der Amplituden ergeben, die dem Regelkreis zugeführt werden würde, wodurch im Effekt keine Datenwiedergabe erzielt werden würde.

Eine Detektions schaltung nach dem Oberbegriff des Anspruchs 1 ist aus EP-A-0677841 bekannt.

Der Erfindung liegt die Aufgabe zugrunde, eine Schaltung und ein Verfahren zur Spurfolgeregelung mit Pilottönen bei Aufzeichnungssystemen für ein Magnetband nach dem Schrägspurverfahren zu schaffen, die eine einfache und sichere Bestimmung der Amplituden der Pilottöne ermöglichen.

Die Aufgabe wird durch den Gegenstand des Anspruchs 1 gelöst. Vorteilhafte Ausgestaltungen der Erfindung sind Gegenstand der Unteransprüche.

Die Amplituden der im Playbacksignal vorhandenden Pilottöne werden mittels einer sog. Quadraturmischung bestimmt. Mit anderen Worten wird das Pilottonsignal in das "Basisband" umgesetzt, so daß die notwendige Filterung zur Bestimmung der Amplituden durch eine Filterung im Tiefpaßbereich durchgeführt werden kann. Dabei liefert jeweils ein Signalgenerator für die jeweilige Pilottonfrequenz F1 oder F2 zwei Pilotonträger, die zueinander um 90° phasenverschoben sind, falls zwei Pilottöne verwendet werden. Das Playbacksignal V wird mit diesen Pilottonträgern in entsprechenden Multiplizierern gemischt. Die sich ergebenden Produkte werden tiefpaßgefiltert, quadriert und aufsummiert, so daß das sich ergebende Signal hinsichtlich des jeweiligen Pilottons dem Quadrat der Pilottonamplitude entspricht. Bei der Verwendung zweier Pilottöne enthält die Differenz der so bestimmten beiden Pilottonamplituden eine Information über die Spurlage des Kopfes, die einem Regelkreis zur Steuerung der Position des Lese-/Schreibkopfes zugeführt werden kann.

Die erfindungsgemäße Schaltung bzw. das erfindungsgemäße Verfahren ist vollständig integrierbar (analog oder digital), vollständig abgleichfrei und kostengünstig. Ein weiterer Vorteil des erfindungsgemäßen Ansatzes liegt darin, daß die zur Demodulation erzeugten Pilotträger an den regenerierten Kanaltakt der Däteninformation gekoppelt werden können, wodurch unterschiedliche Geschwindigkeiten des Videorekorders dann keinen Einfluß auf die Positionsregelung des Kopfes mehr haben. Bei Gleichlaufschwankungen der Bandgeschwindigkeit folgt die Frequenzselektion dann dem Signal. Das kann insbesondere bei schnellem Vorlauf, Slow-motion-Modus oder anderen Trickmodi wichtig sein.

Das vom Band gelesene Wiedergabesignal wird vor Zuführung des Playbacksignals zur Quadraturmischung mit einem Tiefpaßfilter gefiltert werden, so daß Spektralanteile weit oberhalb der Frequenzen F1 und F2 eliminiert werden. Dies reduziert vorteilhafterweise die Anforderungen an die Dynamik, d.h. an die Verarbeitungsgeschwindigkeit, der folgenden Blöcke der Schaltung bzw. des Verfahrens. Weiterhin ist der vorgeschaltete Tiefpaßfilter notwendig, wenn die dem Mischer zugeführten lokalen Pilottonsignale nicht exakt sinusförmig sind. Dann müssen die Spektralanteile bei den Harmonischen der Pilottöne vor den Mischern unterdrückt werden. Da der vorgeschaltete Tiefpaßfilter gemeinsam für beide Signalwege der Pilottöne ist, wird dies auch für das Matching bei einer analogen Realisierung der Schaltung vorteilhaft sein. Bei einer digitalen Realisierung bewirkt der vorgeschaltete Tiefpaßfilter eine Dezimation des Playbacksignals, d.h. Verringerung der Bandbreite, wodurch die Berechnung der nachfolgenden Operationen nach dem Abtasttheorem mit einer langsameren Geschwindigkeit erfolgen kann.

Zur Demodulation der beiden Pilottöne sind zwei Pilottongeneratoren notwendig, wobei vorteilhafterweise die Pilottöne durch eine Teilung des regenerierten Systemtaktes (= Datentakt des Playbacksignals) erzeugt werden können. Dieser Systemtakt wird für die A/D-Umsetzung und die digitalen Teile des Kanaldemodulators benötigt.

Beispielsweise haben bei einer DVC-Kassette (DVC = Digitale Video Cassette) die Pilottöne die Fre-quenzen

$$F1 = FS/60 = 697 \text{ kHz}$$

$$F2 = FS/90 = 464{,}4 \text{ kHz}$$

wobei FS die Systemtaktfrequenz (etwa 41.8 MHz) ist.
Vorteilhafterweise kann der erfindungsgemäße Ansatz sowohl für eine analoge als auch eine digitale Realisierung verwendet werden, wenn das Playbacksignal in digitalisierter Form mit hinreichender Auflösung zur Verfügung steht. Dabei werden die benötigten Tiefpaßfilter mittels digitaler Filter realisiert.
Bei der digitalisierten Version ist es vorteilhafterweise möglich, den vorgeschalteten Eingangstiefpaßfilter in eine Serie von Teilfiltern aufzuspalten. Da das gelesene Signal vom A/D-Umsetzer mit hoher Abtastrate ankommt, ist es notwendig, daß der erste Teilfilter mit dieser hohen Datenrate arbeiten muß. Durch die erste Teilfilterung wird jedoch die Datenrate das erste Mal dezimiert, so daß für den sich anschließenden Teilfilter ein Verarbeiten mit einer zeitgemultiplexten Hardware möglich ist, da nunmehr aufgrund des ersten Tiefpaßfilters eine geringere Bandbreite des Signals vorliegt. Durch die weitere Dezimation der nachfolgenden Teiltiefpaßfilter kann die Datenrate der die Pilottöne enthaltenden Signale so niedrig gemacht werden, daß die Multiplizierer (Demodulatoren) mit einer einzigen parallelen/seriellen Struktur realisierbar sind. Weiterhin bietet die Auspaltung des Eingangstiefpaßfilter in einen Serie von Tiefpaßfilters den Vorteil, daß die dem ersten Filter nachfolgenden Filter an die Frequenz des betreffenden Pilottones angepaßt werden können.
Für die an den Multiplizierern angelegten Pilottonträgersignale gelten die folgenden Beziehungen:

$$A0(t) = C \cos(2pi \, [Fs/60] \, t) \qquad (1)$$

$$A1(t) = C \sin(2pi \, [Fs/60] \, t) \qquad (1)$$

$$B0(t) = C \cos(2pi \, [Fs/90] \, t) \qquad (2)$$

$$B1(t) = C \sin(2pi \, [Fs/90] \, t) \qquad (2),$$

wobei Fs der Datentakt des Playbacksignals ist. Die Fälle (1) entsprechen dem Pilotton F1, während die Fälle (2) dem Pilotton F2 entsprechen. Sicherheitshalber erfolgt im digitalen Fall eine Abtastung mit einer höheren Frequenz als der nach dem Abtasttheorem minimal not-wendigen, beispielsweise:

$$Fs1 = Fs/20$$

und

$$Fs2 = Fs/30.$$

Damit ergibt sich für die Folgen der Abtastwer-te:

$$A0(k) = B0(k) = C \cos(2pi \, k/3) \qquad K = 0, 1, 2$$

$$A1(k) = B1(k) = C \sin(2pi \, k/3) \qquad K = 0, 1, 2.$$

Es sind demnach für die Trägererzeugung nur 2 bis 3 verschiedene Zahlenwerte zu erzeugen.

Nach der Multiplikation bzw. Demodulation ist die Abtastrate der Signal soweit dezimiert, daß nachfolgende Verarbeitungsschritte ohne weiteres von einem digitalen Signalprozessor mitübernommen werden können. Das wäre vorteilhaft in einem System, das bereits einen digitalen Signalprozessor, beispielsweise einen digitalen Servoprozessor, enthält.

Die an den lokalen Eingängen der Multiplizierer anliegenden Pilottonträger zur Demodulation werden durch Frequenzteilung aus einem lokalen Taktsignal T erzeugt, wobei das lokale Taktsignal in seiner Frequenz auf das mit dem Systemtakt vom Speichermedium kommende Datensignal synchronisiert wird.

Kurz nach Wiedergabebeginn wird eine Quarzreferenz verwendet, während nach der Synchronisierung des Taktes auf das ankommende Datensignal bzw. Playbacksignal dessen Takt verwendet wird.

Vorteihafterweise können die Tiefpaßfilter der Pilottonzweige auf einer integrierten Schaltung angeordnet sind, während der Eingangstiefpaßfilter extern ist. Es ist auch möglich alle Tiefpaßfilter auf einer integrierten Schaltung anzuordnen.

Weiterhin weist die Schaltung einen frequenzgesteuerten Taktoszillator und einen Phasendetektor auf, die Teil eines Phasenregelkreises sind, der den Taktoszillator auf den Systemtakt des Playbacksignals synchronisiert. Dabei kann der der Taktoszillator über einen digitalen Steuerbus in seiner Freilauffreqenz abgleichbar sein. Zum Abgleichen der Freilauffrequenz des Taktoszillators kann ein Referenztakt von einem Quarzoszillator mit bekannter Frequenz verwendet werden, der dann an einen Eingang des Phasendetektors angelegt wird. Die Steuerspannung des frequenzgesteuerten Taktoszillators steht in diesem Fall an einem externen Pin des Schaltkreises zur Verfügung. Vorteihafterweise vervielfacht der Phasenregelkreis das an dem einen Eingang des Phasendetektors anliegende Eingangssignal in seiner Frequenz, wobei der Takt über einen Teiler zurückgeführt wird. Die Taktfrequenz ist vorteilhafterweise so gewählt, daß in den Teilerfaktoren zur Erzeugung der beiden Pilottonfrequenzen ein Faktor 4 vorhanden ist. Dabei wird der Teilerfaktor von 4 als letzte Stufe geschaltet, so daß der Signalgenerator für jeden der beiden Pilottöne Pilottonträger mit einer 0- und 90°-Phasenlage liefern kann.

Im digitalen Fall können die Tiefpaßfilter der Pilottonzweige als MTA-Filter (Moving Time Average) ausgebildet sein.

Vorteilhafterweise weist die Anordnung zur Erzeugung des Taktes drei Betriebsarten auf:

i) PLL-Betrieb mit Verwendung des Quarzoszillators und Rückführung des Takts (T) über den Teiler D zum Finden der Spur und zum Abgleich des Oszillators;

ii) PLL-Betrieb mit Verwendung des Datentakts des Playbacksignals und Rückführung über den Teiler D im Playback-Betrieb, insbesondere bei Trickmodes;

iii) Vergleich der Frequenzen des Quarzoszillators und des Datentakts mit Hilfe des Frequenzdetektors FD zur Messung der Bandgeschwindigkeit.

Eine Realisierung der Schaltung kann zum einen Teil mit Hilfe paralleler Arithmetik und Logik und zum anderen Teil als Programm auf einem digitalen Signalprozessor realisiert werden.

Die Erfindung ist nachfolgend anhand der Zeichnungen beschrieben, wobei

Fig. 1 die Detektionsschaltung im analogen Fall zeigt,

Fig. 2 die Erzeugung der zu mischenden Pilottonträger zeigt,

Fig. 3 eine digitale Realisierung des Pilottondetektors zeigt, und

Fig. 4 die Takterzeugung zur Erzeugung des Signaltaktes zeigt, und

Fig. 5 eine Darstellung des Schrägspuraufzeichnungsverfahrens unter Verwendung zweier Pilottöne zeigt

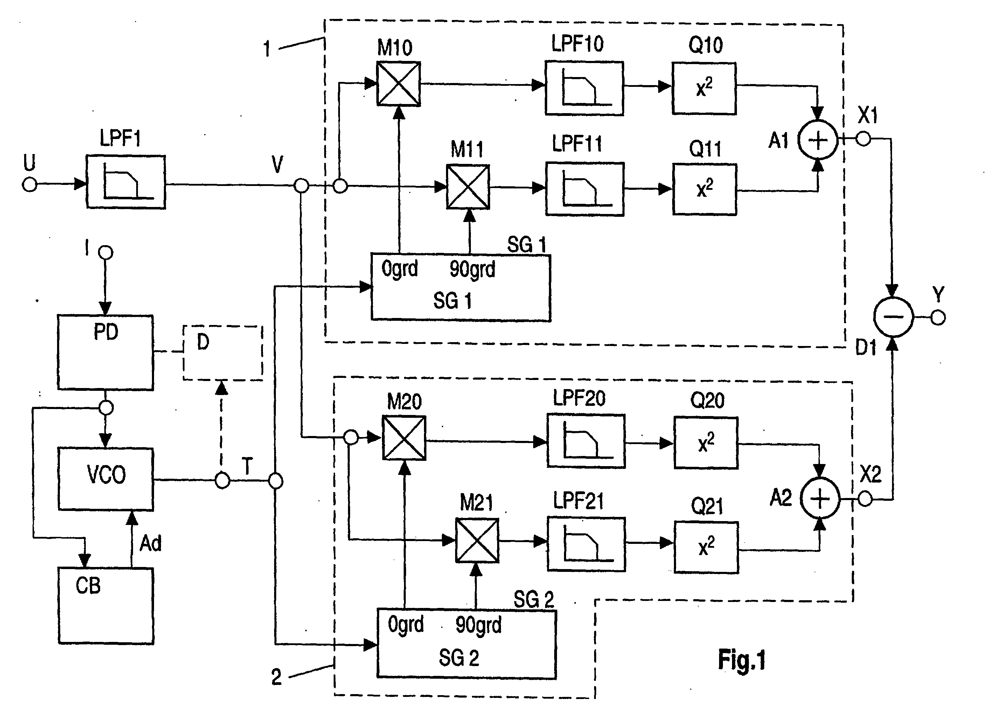

Fig. 1 zeigt eine bevorzugte Ausführungsform der Detektionsschaltung zur Ermittlung eines Steuersignals Y für die Positionierung des Lese-/Schreibkopfes einer Magnetbandaufzeichnungsvorrichtung aus den Amplituden der verwendeten beiden Pilottöne, die wie in der Fig. 5 beschrieben aufgezeichnet werden. Dabei enthält beispielsweise Spur 0 neben dem Nutzsignal den Pilotton F1, Spur 1 nur Nutzsignal, Spur 2 neben dem Nutzsignal den Pilotton F2, Spur 3 nur Nutzsignal, und Spur 4 neben dem Nutzsignal den Pilotton F1 usw. Dargestellt ist eine Ausführungsform im analogen Fall. Das vom Band gelesene Signal U (Playbacksignal) wird in einem ersten gemeinsamen Eimgangstiefpaßfilter LPF1 tiefpaßgefiltert, um starke Spektralanteile weit oberhalb der Pilottonfrequenzen F1 bzw. F2 zu eliminieren. Das resultierende tiefpaßgefilterte Playbacksignal V wird einem ersten Quadraturmischzweig 1 bezüglich der Frequenz F1 und einem zweiten Quadraturmischzweig 2 bezüglich der Pilottonfrequenz F2 zugeführt. Im folgenden wird der erste Quadraturmischzweig 1 erklärt, da sich der zweite Quadraturmischzweig nur hinsichtlich der Pilottonfrequenz vom ersten unterscheidet. Ein Signalgenerator SG1 liefert zwei Träger der Pilottonfrequenz F1, die, wie in der Fig. 1 angedeutet, zueinander um 90° phasenverschoben sind. Anschaulich bedeutet das im einen Fall eine Sinusschwingung und im anderen Fall eine Kosinusschwingung. Der Quadraturmischzweig 1 umfaßt zwei Unterzweige, die jeweils von dem Mischer M10, dem Tiefpaßfilter LPF10 und dem Quadrierer Q10 bzw. dem Mischer M11, dem Tiefpaßfilter LPF11 und dem Quadrierer Q11 gebildet werden. Das tiefpaßgefilterte Playbacksignal V wird mit dem Signalgenerator SG1 erzeugten Trägern in den Multiplizierern M10 und M11 gemischt. Die sich in den Mischern ergebenden Produkte werden in den jeweiligen Tiefpaßfiltern LPF10 bzw. LPF11 tiefpaßgefiltert und anschließend in den entsprechenden Quadrierern Q10 bzw. Q11 quadriert. Durch die entsprechende Wahl der Tiefpaßfilter LPF10 und LPF11 werden höhere Harmonische unterdrückt, so daß in den Quadrierern jeweils der $\cos^2$ bzw. der $\sin^2$ mit dem entsprechenden 1/4-Wert der Pilottonamplitude gebildet wird. Durch die Addition in Punkt A1 der beiden Werte ergibt sich demnach als Ausgangssignal X1 das Amplitudenquadrat des Pilottones F1 multipliziert mit einem konstanten Faktor von 1/4, der unbeachtlich ist. Dieselbe Operation wird in dem Quadraturzweig 2 mit dem einzigen Unterschied durchgeführt, daß der Signalgenerator SG2 zwei zueinander um 90° phasenverschobene Pilottonträger der Frequenz F2 erzeugt. Dabei umfaßt der Quadraturzweig 2 die Multiplizierer M20 und M21, die Tiefpaßfilter LPF20 und LPF21 sowie die Quadrierer Q20 und Q21, wobei die Resultate der beiden Unterzweige in Punkt A2 addiert werden, so daß als Ausgangssignal X2 das Quadrat der Pilottonamplitude hinsichtlich der Frequenz F2 anliegt, wobei das Amplitudenquadrat mit einem Faktor 1/4 multipliziert ist, der eine reine Normierungsgröße darstellt. Die beiden sich ergebenden Ausgangssignale der Amplitudenquadrate der Pilottöne F1 und F2 werden in einem Subtrahierer D1 voneinander subtrahiert und ergeben das Steuersignal Y. Vorteilhafterweise werden die Amplitudenquadrate für das Regelsignal verwendet, da eine Betragbildung der Größen X1 und X2 außer erhöhtem Rechenaufwand und verringerter Genauigkeit keine Vorteile bringt.

Zur Erzeugung der benötigten Frequenzen der Signalgeneratoren SG1 und SG2 werden diese von einer Taktfrequenz T gesteuert, die in einem Phasenregelkreis (PLL), bestehend aus einem Phasendetektor PD und einem frequenzgesteuerten Taktoszillator VCO, erzeugt wird. Der frequenzgesteuerte Taktoszillator läßt sich mittels eines Signals Ad über einen digitalen Steuerbus CB in seiner Freilauffrequenz abgleichen. Zum Abgleich wird ein Referenztakt von einem Quarzoszillator mit bekannter Frequenz an einem Eingang I des Phasendetektors PD angelegt. Die PLL vervielfacht das an dem Eingang I des Phasendetektors PD anliegende Eingangssignal in seiner Frequenz, wozu in der Rückführung des Taktsignals T auf den Phasendetektor PD ein Teiler D angeordnet sein kann.

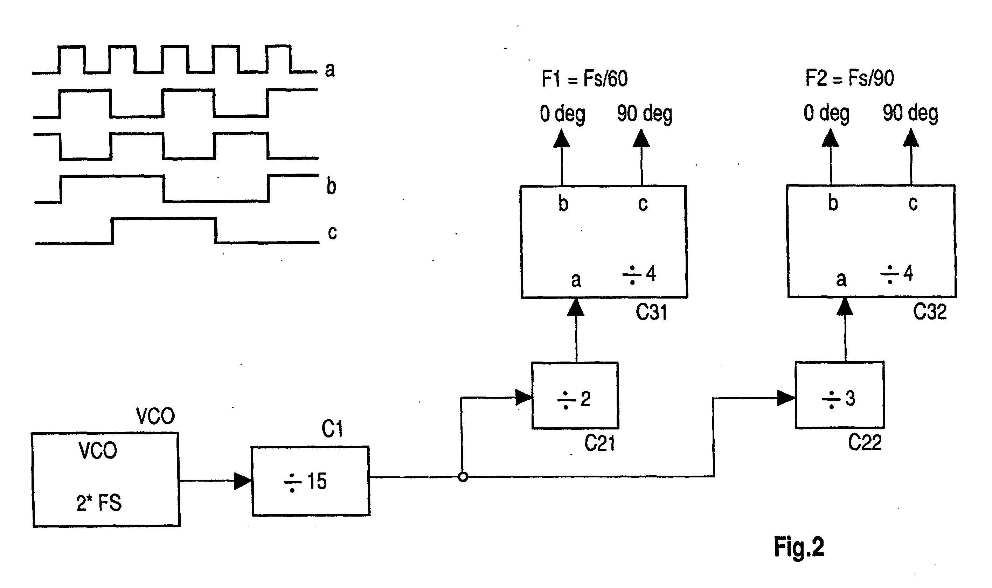

Die Fig. 2 zeigt eine Realisierung der Taktfrequenz für die Signalgeneratoren SG1 und SG2. Von dem frequenzgesteuerten Taktoszillator VCO wird das doppelte der Datentaktrate ausgegeben, die in einem ersten Teiler mit einem Faktor 15 geteilt wird. Nach einer Parallelverzweigung wird die um den Faktoren 15 verminderte Taktfrequenz in einem weiteren Teiler C21 um den Faktor 2 bzw. in einem Teiler C22 um den Faktor 3 geteilt. Die sich ergebenden Frequenzen werden jeweils einem Teiler C31 bzw. C32 zugeführt, in dem die Frequenz weiter um einen Faktor 4 herabgesetzt wird. Demzufolge ergeben sich hinsichtlich des Signalgenerators SG1 die erste Pilottonfrequenz F1, die 1/60 der Datentaktrate des Playbacksignals beträgt, und in dem Signalgenerator SG2 die Pilottonfrequenz F2, die 1/90 der Datentaktrate beträgt.

In der Fig. 2 links oben sind Pulsdiagramme angegeben, wobei die obere Reihe a den Eingangstakt am Dividierer C31 bzw. C32 darstellt, der jeweils zweimal um einen Faktor 2 untersetzt die Ausgangssignale B und C ergibt, die am Ausgang des jeweiligen Signalgenerators SG1 bzw. SG2 um 90° untereinander phasenverschoben sind.

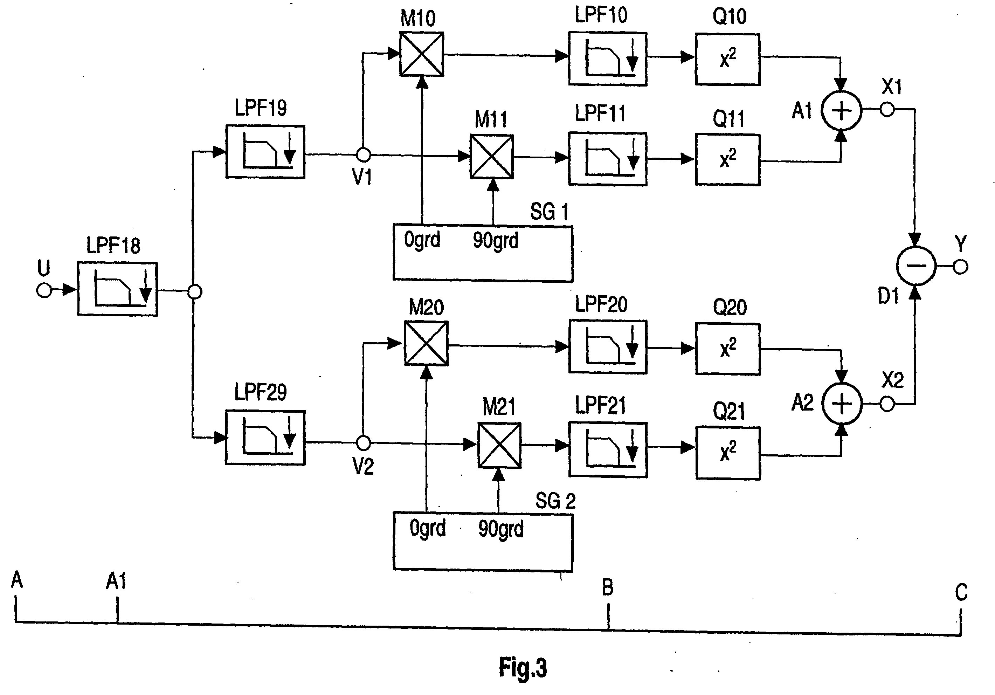

Fig. 3 zeigt eine digitale Realisierung der Detektorschaltung nach Fig. 1. Um die Bandbreiten des ankommenden Digitalplaybacksignals U entsprechend den verwendeten Pilottonfrequenzen F1 und F2 zu dezimieren, wird der Eingangstiefpaßfilter der Fig. 1 nunmehr in einen gemeinsamen Eingangstiefpaßfilter LPF18 und nachfolgend jeweils einen Tiefpaßfilter LPF19 für den Quadraturmischzweig der Frequenz F1, und einen Tiefpaßfilter LPF29 für den Quadraturmischzweig der Pilottonfrequenz F2 aufgespalten. Das hat den Vorteil, daß die Abtastrate in den nachfolgenden Verarbeitungsstufen dezimiert wird, so daß, wie unten angezeigt, im Punkt A das digitale Playbacksignal noch die volle Abtastrate aufweist, während diese Rate nach dem ersten Tiefpaßfilter LPF18 im Punkt A1 bereits dezimiert ist. Folglich ist in den nachfolgenden Schaltungsteilen von Punkt A1 bis zum Punkt B eine Verarbeitung mit zeitgemultiplexter Hardware möglich. Eine weitere Dezimation erfolgt in den Filterblöcken LPF19 bzw. LPF29, so daß die Rate der dort resultierenden Signale V1 bzw. V2 nun so niedrig ist, daß alle Multiplizierer M10, M11, M20 und M21 mit einer einzigen parallelen/seriellen Struktur realisierbar sind. Innerhalb der folgenden Tiefpaßfilterblöcke LPF10, LPF11, LPF20 und LPF21 ist die Abtastrate der vier Signale dann soweit dezimiert worden, daß alle folgenden Verarbeitungsschritte von einem digitalen Signalprozessor mitübernommen werden können. Dies ist insbesondere vorteilhaft in einem System, das bereits einen digitalen Servoprozessor enthält. Die Schnittstelle zwischen der Hardware und dem digitalen Signalprozessor ist in der Fig. 3 mit dem Punkt B bezeichnet.

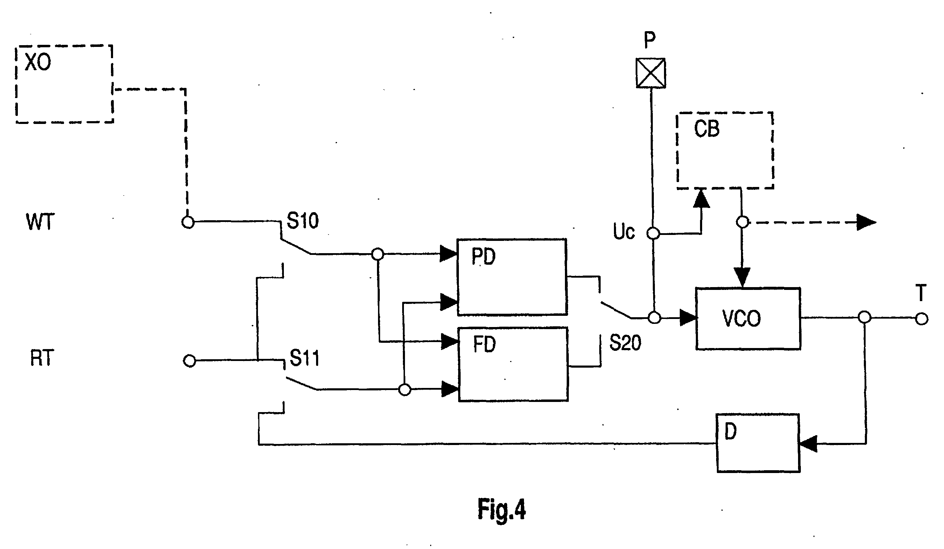

Die Fig. 4 zeigt eine mögliche Gesamtanordnung zur Erzeugung des Taktes T für das Detektorsystem. Der frequenzgesteuerte Oszillator VCO kann über drei Betriebsarten gesteuert werden, nämlich einerseits einen PLL-Betrieb mit der Verwendung einer externen Quarzoszillatorfrequenz und Rückführung des Taktes über den Teiler D zum Finden der Spur und zum Abgleich des Oszillators VCO, andererseits einen PLL-Betrieb unter Verwendung des Datentaktes des Playbacksignals und Rückführung des Taktes über den Teiler D im Playbackmodus, was insbesondere vorteilhaft bei Trickmodi ist, und ein Vergleich der Frequenzen des Quarzoszillators und des Datentaktes mit Hilfe des Frequenzdetektors FD zur Messung der Bandgeschwindigkeit. Der sich ergebende Wert kann über einen externen Pin P oder in digitalisierter Form über den Steuerbus CB gelesen werden.

Vorteilhafterweise ist die Schaltung voll digital (amplituden- und zeitdiskret) auf einem integrierten CMOS-Schaltkreis realisierbar. Dabei kommt das Eingangssignal U von einem A/D-Umsetzer für das Wiedergabesignal. Die Filter LPF1, LPF11, LPF12, LPF20 und LPF21 sind mit speziellen Filterstrukturen ausgestattet, die als MTA-Filter oder Comb-Filter bekannt sind.

**Patentansprüche**

1. Detektionsschaltung zur Spurfolgeregelung verwendeter Pilottöne bei einem Magnetbandaufzeichnungssystem nach dem Schrägspurverfahren mittels Differenzbildung der Amplitudenquadrate zweier, nach einer Quadraturmischung ins Basisband umgesetzter Pilottöne durch Multiplizieren des jeweiligen, im vom Speichermedium kommenden Playbacksignal enthaltenen Pilottons mit einem entsprechenden Pilottonträger, darauffolgender Tiefpassfilterung und anschließender Quadrierung, mit einem Zweig (1) zur Amplitudenbestimmung des ersten Pilottons und einem dazu parallelen Zweig (2) zur Amplitudenbestimmung des zweiten Pilottons, wobei jeder Pilottonzweig (1, 2) zwei parallele Unterzweige aufweist, die jeweils aus der Hintereinanderschaltung eines Multiplizierers (M10, M11; M20, M21), eines Tiefpaßfilters (LPF10, LPF11; LPF20, LPF21) und eines Quadrierers (Q10, Q11; Q20, Q21) bestehen, wobei in den Multiplizierern (M10, M11; M20, M21) das vom Speichermedium kommende Playbacksignal mit dem Pilottonträger der Frequenz des jeweiligen Pilottons multipliziert wird, wobei die in den jeweiligen Unterzweigen verwendeten Pilottonträger jeweils um 90° zueinander phasenverschoben sind und durch Frequenzteilung eines Taktsignals (T) erzeugt werden, und die Ergebnisse der jeweiligen Unterzweige addiert werden, **dadurch gekennzeichnet, dass** für die Erzeugung des Taktsignals (T) eine Schaltungsanordnung mit einem frequenzgesteuerten Taktoszillator (VCO) vorgesehen ist, die bei der Erzeugung des Taktsignals (T) als Referenz kurz nach Wiedergabebeginn einen lokal vorhandenen Quarz (XO) verwendet und nach Synchronisierung des Taktoszillators (VCO) auf das vom Speichermedium kommende Playbacksignal von der Quarzreferenz (XO) auf den Datentakt des Playbacksignals umschaltet.

2. Schaltung nach Anspruch 1, **dadurch gekennzeichnet, dass** als Taktoszillator (VCO) ein spannungsgesteuerter Oszillator verwendet wird, der mit einem Phasendetektor (PD) einen Phasenregelkreis bildet.

3. Schaltung nach Anspruch 2, **dadurch gekennzeichnet, dass** der Taktoszillator (VCO) über einen digitalen Steuerbus (CB) hinsichtlich seiner Freilauffrequenz abgleichbar ist, wobei zur Gewinnung eines Referenztaktes, der als Eingangssignal einem Eingang des Phasendetektors (PD) zugeführt wird, der Quarz (XO) verwendet wird.

4. Schaltung nach Anspruch 2 und/oder 3, **dadurch gekennzeichnet, dass** für den frequenzgesteuerten Taktoszillator (VCO) eine Steuerspannung ($U_C$) an einem externen Pin (P) eines Schaltkreises zur Verfügung steht.

5. Schaltung nach einem oder mehreren der vorangegangenen . Ansprüche 2-4, **dadurch gekennzeichnet, dass** der Phasenregelkreis (PLL) das dem einen Eingang des Phasendetektors (PD) zugeführte Eingangssignal in seiner Frequenz vervielfacht.

6. Schaltung nach Anspruch 5, **dadurch gekennzeichnet, dass** das Taktsignal (T) des Taktoszillators (VCO) über einen Teiler (D) in den Phasenregelkreis (PLL) zurückgeführt wird.

7. Schaltung nach Anspruch 6, **dadurch gekennzeichnet, dass** die Frequenz des Taktsignals (T) so gewählt ist, dass in den Teilerfaktoren für die Erzeugung der beiden Pilottonfrequenzen ein Faktor 4 vorhanden ist.

8. Schaltung nach Anspruch 7, **dadurch gekennzeichnet, dass** der Teilerfaktor "4" als letzte Stufe geschaltet wird und für jeden der beiden Pilottöne die 0° - und 90°-Phasenlagen der entsprechenden Pilottträger geliefert werden.

9. Schaltung nach einem oder mehreren der vorangegangenen Ansprüche Anspruch 1-8, **dadurch gekennzeichnet, dass** die Schaltungsanordnung zur Erzeugung des Taktsignals (T) drei Betriebsarten aufweist:

    i) einen PLL-Betrieb mit der Verwendung des Quarzes (XO) als Referenz und Rückführung des Takts (T) über einen Teiler (D) zum Finden einer aufgezeichneten Spur sowie zum Abgleich des Oszillators;
    ii) einen PLL-Betrieb mit Verwendung des Datentakts des ankommenden Playbacksignals und Rückführung über den Teiler (D) im Playback-Betrieb, insbesondere bei Trickmodi;

iii) Vergleich der mit dem Quarz (XO) erzeugten Frequenz mit der Frequenz des Datentakts des ankommenden Playbacksignals mit Hilfe eines Frequenzdetektors (FD) bei Messung der Bandgeschwindigkeit.

**10.** Schaltung nach Anspruch 1, **dadurch gekennzeichnet, dass** das von den Spuren gelesene Playbacksignal vor der Quadraturmischung in einem ersten Tiefpaßfilter (LPF1) tiefpaßgefiltert wird.

**11.** Schaltung nach Anspruch 10, **dadurch gekennzeichnet, dass** das vor der Quadraturmischung angeordnete Tiefpaßfilter (LPF1) durch drei Tiefpaßfilter (LPP18, LPF19, LPF29) ersetzt ist, wobei der erste Tiefpaßfilter (LPF18) das ankommende Playbacksignal filtert, während die weiteren Tiefpaßfilter (LPF19, LPF29) jeweils vor dem entsprechenden Pilottonzweig (1, 2) angeordnet sind, wobei die weiteren Tiefpaßfilter (LPP19, LPF29) an die Frequenz (F1, F2) des jeweiligen Pilottons angepaßt sind.

**12.** Schaltung nach Anspruch 10, **dadurch gekennzeichnet, dass** die Tiefpaßfilter (LPF10, LPf11, LPF20, LPF21) der Pilottonzweige (1, 2) auf einer integrierten Schaltung angeordnet sind, und dass der vordere Tiefpaßfilter (LPF1; LPF18, LPf19, LPF20) extern ist.

**13.** Schaltung nach einem oder mehreren der Ansprüche 10-12, **dadurch gekennzeichnet, dass** alle Tiefpaßfilter (LPF1, PLF10, LPF11, LPF20, LPF21) auf einer integrierten Schaltung angeordnet sind.

**14.** Schaltung nach Anspruch 1, **dadurch gekennzeichnet, dass** die Tiefpaßfilter (LPF10, LPF11, LPF20, LPF21) der der Pilottonzweige (1, 2) als MTA-Filter (Moving Time Average) ausgebildet sind.

**Claims**

**1.** Detection circuit for tracking control of used pilot tones within a magnetic-tape recording system according to the helical-scan recording method by forming the difference of the amplitude squares of two pilot tones transferred into the baseband after a quadrature mixing by multiplicating the respective pilot tone included within the playback signal derived from the storage medium with a corresponding pilot carrier, subsequent low-pass filtering and subsequent quadration, including a branch (1) for amplitude determination of the first pilot tone and a branch (2) parallel thereto for amplitude determination of the second pilot tone, wherein each pilot tone branch (1, 2) exhibits to parallel subbranches being formed respectively by the series connection of a multiplier (M10, M11; M20, M21), a low-pass filter (LPF10, LPF11; LPF20, LPF21) and a squarer (Q10, Q11; Q20, Q21), wherein within the multipliers (M10, M11; M20, M21) the playback signal coming from the storage medium is multiplied with the pilot carrier of the frequency of the respective pilot tone, wherein the pilot tone carriers used within the respective subbranches are phase-shifted by 90° with respect to each other and are generated by frequency division of a clock signal (T), and the results of the respective subbranches are added, **characterized in that** for generating the clock signal (T) a circuit arrangement is provided including a frequency controlled clock oscillator (VCO) said circuit arrangement being used with the generation of the clock signal (T) as reference shortly after the start of the playback a locally available quartz (XO) and which is switched after synchronisation of the clock oscillator (VCO) to the playback signal coming from the storage medium from the quartz reference (XO) to the data clock of the playback signal.

**2.** Circuit according to claim 1, **characterized in that** a voltage controlled oscillator is used as clock oscillator (VCO) forming a phase control loop together with a phase detector (PD).

**3.** Circuit according to claim 2, **characterized in that** the clock oscillator (VCO) can be trimmed via a digital control bus (CD) with respect to its free running frequency, wherein the quartz (XO) is used for obtaining a reference clock which is applied as an input signal to an input of the phase detector (PD).

**4.** Circuit according to claim 2 and/or 3, **characterized in that** a control voltage (Uc) is available at an external pin (P) of a switching circuit for the frequency controlled clock oscillator (VCO).

**5.** Circuit according to one or several of the preceding claims 2 - 4, **characterized in that** the phase control loop (PLL) multiplies the grequency of the input signal applied to an input of the phase detector (PD).

**6.** Circuit according to claim 5, **characterized in that** the clock signal (T) of the clock oscillator (VCO) is fed back via a divider (D) within the phase control loop (PLL).

**7.** Circuit according to claim 6, **characterized in that** the frequency of the clock signal (T) is chosen in such a way that a factor 4 is present within the divider factors for the generation of the two pilot tone frequencies.

**8.** Circuit according to claim 7, **characterized in that** the divider factor "4" is switched as the last stage arid that the 0° and 90° phase positions of the corresponding pilot carriers are provided to each of the two pilot tones.

**9.** Circuit according to one or several of the preceding claims 1 - 8, **characterized in that** the circuit arrangement for generating the clock signal (T) exhibits three modes of operation:

(i) a PLL-mode with the employment of the quartz (X) as reference and feeding back the clock (T) via a divider (D) for finding a recorded track and for trimming the oscillator,
(ii) a PLL-mode with employment of the data clock of the arriving playback signal and feeding back via the divider (D) within playback mode, especially with trick modes,
(iii) comparison of the frequency generated by the quartz (XO) with the frequency of the data clock of the arriving playback signal by means of a frequency detector (FD) with measuring of the tape speed.

**10.** Circuit according to claim 1, **characterized in that** the playback signal read from the tracks is low-pass filtered within a first low-pass filter (LPF1) before the quadrature mixing.

**11.** Circuit according to claim 10, **characterized in that** the low-pass filter (LPF1) arranged before the quadrature mixing is replaced by three low-pass filters (LPF18, LPF19, LPF29), wherein the first low-pass filter (LPF18) filters the arriving playback signal while the further low-pass filters (LPF19, LPF20) are arranged respectively before the corresponding pilot tone branch (1, 2), wherein the further low-pass filters (LPF19, LPF20) are matched to the frequency (F1, F2) of the respective pilot tone.

**12.** Circuit according to claim 10, **characterized in that** the low-pass filters (LPF10, LPF11, LPF20, LPF21) of the pilot tone branches (1, 2) are arranged on an integrated circuit and that the front low-pass filter (LPF1; LPF18, LPF19, LPF20) is arranged externally.

**13.** Circuit according to one or several of claims 10 - 12, **characterized in that** all low-pass filters (LPF1, LPF10, LPF11, LPF20, LPF21) are arranged on an integrated circuit.

**14.** Circuit according to claim 1, **characterized in that** the low-pass filters (LPF10, LPF11, LPF20, LPF21) of the pilot tone branches (1, 2) are configured as MTA-filters (Moving Time Average).

**Revendications**

**1.** Circuit de détection pour le suivi de piste de signaux pilotes utilisés dans un système d'enregistrement sur bande magnétique selon le procédé de piste inclinée au moyen de la soustraction des carrés des amplitudes de deux signaux pilotes convertis dans la bande de base suite à un mélange en quadrature par multiplication du signal pilote correspondant contenu dans le signal reproduit provenant du support de mémoire par une porteuse pilote correspondante, d'un filtrage passe-bas consécutif suivi d'une élévation au carré, avec une branche (1) permettant de déterminer l'amplitude du premier signal pilote et une autre branche (2), parallèle à la première, permettant de déterminer l'amplitude du second signal pilote, où chacune des branches de signaux pilotes (1, 2) comporte deux sous-branches parallèles, qui se composent chacune du branchement en série d'un multiplicateur (M10, M11 ; M20, M21), d'un filtre passe-bas (LPF10, LPF11 ; LPF20, LPF21) et d'un élévateur au carré (Q10, Q11 ; Q20, Q21), où, dans les multiplicateurs (M10, M11 ; M20, M21), le signal reproduit provenant du support de mémoire est multiplié par la porteuse pilote de la fréquence du signal pilote correspondant, où les porteuses pilotes utilisées dans les sous-branches correspondantes sont respectivement en décalage de phase de 90° les unes par rapport aux autres et sont générées par division de fréquence d'un signal de rythme (T), et les résultats des sous-branches correspondantes sont additionnés, **caractérisé en ce que** pour la génération du signal de rythme (T) un agencement de circuits comportant un oscillateur de rythme commandé par fréquence (VCO) est prévu, lequel agencement utilise, lors de la génération du signal de rythme (T), un quartz localement présent (XO) comme référence immédiatement après le début de la lecture et, après la synchronisation de l'oscillateur de rythme (VCO) sur le signal reproduit provenant du support de mémoire, commute, à partir de la référence à quartz (XO), sur le rythme de données du signal reproduit.

**2.** Circuit conforme à la revendication 1, **caractérisé en ce qu'**un oscillateur commandé par tension est utilisé comme oscillateur de rythme (VCO) et forme, avec un détecteur de phase (PD), une boucle à verrouillage de phase.

**3.** Circuit conforme à la revendication 2, **caractérisé en ce que** l'oscillateur de rythme (VCO) peut être réglé via un bus de commande numérique (CB) en ce qui concerne sa fréquence de roue libre, où le quartz (XO) est utilisé pour obtenir un rythme de référence qui est généré comme signal d'entrée au niveau d'une entrée du détecteur de phase (PD).

**4.** Circuit conforme à la revendication 2 et/ou 3, **caractérisé en ce que,** pour l'oscillateur de rythme commandé par fréquence (VCO), une tension de commande ($U_C$) est mise à disposition sur une broche externe (P) d'un circuit de commutation.

**5.** Circuit conforme à l'une ou à plusieurs des revendications 2 à 4 précédentes, **caractérisé en ce que** la boucle à verrouillage de phase (PLL) multiplie dans sa fréquence le signal d'entrée généré au niveau d'une entrée du détecteur de phase (PD).

**6.** Circuit conforme à la revendication 5, **caractérisé en ce que** le signal de rythme (T) de l'oscillateur de rythme (VCO) est renvoyé via un diviseur (D) dans la boucle à verrouillage de phase (PLL).

**7.** Circuit conforme à la revendication 6, **caractérisé en ce que** la fréquence du signal de rythme (T) est choisie de sorte qu'un facteur 4 soit présent dans les facteurs diviseurs pour la génération des deux fréquences de signaux pilotes.

**8.** Circuit conforme à la revendication 7, **caractérisé en ce que** le facteur diviseur « 4 » est connecté comme dernière étape et les positions de phase 0° et 90° des porteuses pilotes correspondantes sont fournies pour chacun des deux signaux pilotes.

**9.** Circuit conforme à l'une ou à plusieurs des revendications 1 à 8 précédentes, **caractérisé en ce que** l'agencement de circuits permettant la génération du signal de rythme (T) présente trois modes de fonctionnement :

i.) un fonctionnement en boucle à verrouillage de phase avec utilisation du quartz (XO) comme référence et renvoi du rythme (T) via un diviseur (D) pour rechercher une piste enregistrée ainsi que pour régler l'oscillateur ;
ii.) un fonctionnement en boucle à verrouillage de phase avec utilisation du rythme de données du signal reproduit entrant et renvoi via le diviseur (D) en mode de lecture, en particulier pour les modes de lecture non standard ;
iii.) comparaison de la fréquence générée par le quartz (XO) avec la fréquence du rythme de données du signal reproduit entrant à l'aide d'un détecteur de fréquence (FD) lors de la mesure de la vitesse de la bande.

**10.** Circuit conforme à la revendication 1, **caractérisé en ce que** le signal reproduit lu par les pistes est filtré en passe-bas dans un premier filtre passe-bas (LPF1) avant le mélange en quadrature.

**11.** Circuit conforme à la revendication 10, **caractérisé en ce que** le filtre passe-bas (LPF1) disposé avant le mélange en quadrature est remplacé par trois filtres passe-bas (LPF18, LPF19, LPF29), où le premier filtre passe-bas (LPF18) filtre le signal reproduit entrant, tandis que les autres filtres passe-bas (LPF19, LPF29) sont disposés respectivement avant la branche de signaux pilotes correspondante (1,2), où les autres filtres passe-bas (LPF19, LPF29) sont réglés en fonction de la fréquence ($F_1$, $F_2$) du signal pilote correspondant.

**12.** Circuit conforme à la revendication 10, **caractérisé en ce que** les filtres passe-bas (LPF10, LPF11, LPF20, LPF21) des branches de signaux pilotes (1, 2) sont disposés sur un circuit intégré, **et en ce que** le filtre passe-bas avant (LPF1 ; LPF18, LPF19, LPF20) est externe.

**13.** Circuit conforme à l'une ou à plusieurs des revendications 10 à 12, **caractérisé en ce que** tous les filtres passe-bas (LPF1, LPF10, LPF11, LPF20, LPF21) sont disposés sur un circuit intégré.

**14.** Circuit conforme à la revendication 1, **caractérisé en ce que** les filtres passe-bas (LPF10, LPF11, LPF20, LPF21) des branches de signaux pilotes (1, 2) se présentent sous forme de filtres MTA (Moving Time Average).

Fig.1

Fig.2

EP 0 795 853 B1

**Fig.3**

EP 0 795 853 B1

EP 0 795 853 B1

Fig.4

13

EP 0 795 853 B1

**Fig.5**

14